# FASCICULE DE BREVET EUROPEEN

(11) **EP 2 896 117 B1**
(45) Date de publication et mention de la délivrance du brevet: **31.08.2016**
(21) Numéro de dépôt: 13767032.9
(22) Date de dépôt: 02.09.2013
(51) Int. Cl.: H02K 3/52

(54) **ISOLANT DE BOBINE MIXTE RÉALISÉ EN DEUX PARTIES ET ÉLÉMENT DE MACHINE ÉLECTRIQUE CORRESPONDANT**
GEMISCHTER SPULENISOLIERER AUS ZWEI TEILEN UND ENTSPRECHENDES BAUTEIL EINER ELEKTRISCHEN MASCHINE
MIXED COIL INSULATOR MADE FROM TWO PARTS AND CORRESPONDING ELEMENT OF AN ELECTRICAL MACHINE

(30) Priorité: 12.09.2012 FR 1258555
(43) Date de publication de la demande: 22.07.2015
(73) Titulaire: Valeo Equipements Electriques Moteur, 94046 Créteil Cedex (FR)
(72) Inventeur: JUGOVIC, Svetislav, F-91200 Athis-Mons (FR); EL BARAKA, Khadija, F-77700 Serris (FR)
(74) Mandataire: Ribeil, Alexandre
(86) Numéro de dépôt international: PCT/FR2013/052005
(87) Numéro de publication internationale: WO 2014/041277

(56) Documents cités:
- WO-A1-2011/037087
- DE-U1-202010 003 640
- JP-A- 2006 340 581
- JP-A- 2008 278 628

## Description

### DOMAINE TECHNIQUE DE L'INVENTION

L'invention concerne un isolant de bobine mixte réalisé en deux parties ainsi qu'un élément de machine électrique consistant en un rotor ou un stator comportant des dents recouvertes chacune dudit isolant de bobine autour duquel est enroulée une bobine. Par isolant "mixte", on entend un isolant réalisé en au moins deux matériaux différents présentant des propriétés différentes, notamment en termes de conduction de chaleur.

L'invention se rapporte au domaine des machines électriques telles que les moteurs, les alternateurs, ou les alterno-démarreurs. L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ETAT DE LA TECHNIQUE

On connaît des machines électriques comportant un stator et un rotor solidaire d'un arbre. Le rotor pourra être solidaire d'un arbre menant et/ou mené et pourra appartenir à une machine électrique tournante sous la forme d'un alternateur comme décrit dans le document EP 0 803 962 ou d'un moteur électrique comme décrit dans le document EP 0 831 580.

On connaît aussi des isolants de bobine comme décrits dans le document DE 202010003640U.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. On monte sur ces dents des bobines préformées réalisées à partir d'un fil enroulé sur plusieurs tours. Les fils consistent par exemple en un fil de cuivre revêtu d'émail.

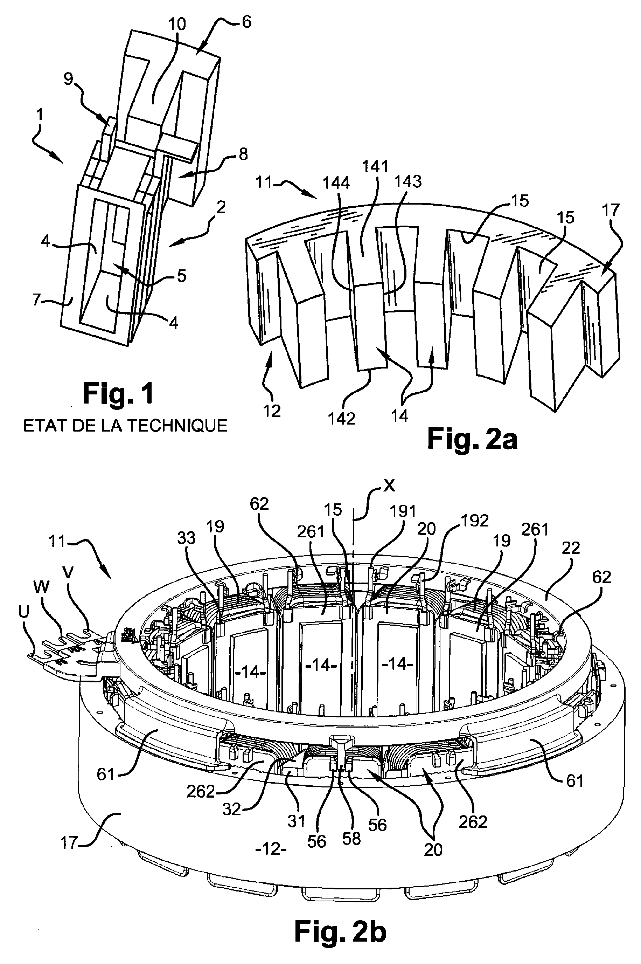

Comme cela est visible sur la figure 1, chaque bobine est montée autour d'un isolant d'encoche 1 électriquement isolant ayant un corps 2 comportant des parois 4 délimitant un cadre 5 de forme globalement rectangulaire. Le corps 2 de l'isolant comporte en outre un rebord avant 7 et un rebord arrière 8 définissant avec les parois 4 du cadre 5 une gorge de montage d'une bobine 9. Le rebord arrière 8 est destiné à être positionné à proximité de la culasse 6 tandis que le rebord avant 7 est situé du côté intérieur de la machine. L'ensemble est destiné à être enfilé autour de la dent 10.

Dans une forme de réalisation, deux bobines sont implantées dans une même encoche, chaque bobine étant enroulée autour de l'une des dents délimitant l'encoche par l'intermédiaire d'un isolant de bobine. Les bobines sont interconnectées entre elles, par exemple par soudure ou à l'aide d'un connecteur pour former une phase de la machine qui pourra être du type polyphasée.

### OBJET DE L'INVENTION

L'invention vise à faciliter la fabrication et l'assemblage de l'isolant de bobine autour d'une dent du stator ou du rotor de la machine électrique tout en améliorant le transfert de chaleur entre la bobine et la dent.

A cet effet, l'invention a pour objet un isolant de bobine destiné à être positionné autour d'une dent d'un stator ou d'un rotor d'une machine électrique, caractérisé en ce qu'il comporte un corps ayant des parois latérales et des parois d'extrémité formant un cadre, les parois latérales comportant chacune une fenêtre en regard de laquelle est destiné à être positionné un élément rapporté réalisé dans un matériau souple bon conducteur de chaleur, ainsi qu'un rebord avant et un rebord arrière formés chacun par des bordures longitudinales reliées entre elles par des bordures transversales, ces rebords avant et arrière définissant une gorge de montage pour l'enroulement d'une bobine, et en ce que le corps est réalisé en deux parties séparées verticalement suivant un plan sensiblement parallèle aux parois latérales et passant par les parois d'extrémité du cadre.

Selon une réalisation, chaque partie comporte:
- une paroi latérale du cadre ayant une fenêtre et des bordures longitudinales du rebord avant et du rebord arrière correspondantes, et
- une portion des parois d'extrémité du cadre et une portion des bordures transversales du rebord avant et du rebord arrière correspondantes.

Selon une réalisation, les éléments rapportés de forme globalement rectangulaire présentent des rebords longitudinaux pliés vers l'extérieur du cadre destinés à coopérer avec des évidements réalisés dans les bordures longitudinales des rebords de chaque partie de l'isolant.

Selon une réalisation, les éléments rapportés de forme globalement rectangulaire présentent des rebords transversaux pliés vers l'intérieur du cadre destinés à coopérer avec des rainures ménagées dans les portions des parois d'extrémité de chaque partie de l'isolant.

Selon une réalisation, une des parties porte une ailette pliable par rapport au corps apte à assurer une isolation électrique entre deux bobines montées sur deux dents adjacentes, cette ailette étant située dans le prolongement d'une bordure longitudinale d'un des rebords.

Selon une réalisation, une des parties comporte un talon situé dans le prolongement d'une bordure longitudinale du rebord arrière destiné à être plaqué contre un fond d'une encoche du stator ou du rotor.

Selon une réalisation, les deux parties présentent des zones de jonction au niveau desquelles les deux parties se recouvrent l'une sur l'autre.

Selon une réalisation, les zones de jonction se situent au niveau des extrémités des portions des parois d'extrémité et des portions des bordures transversales des rebords des deux parties de l'isolant.

Selon une réalisation, les portions des parois d'extrémité sont amincies au niveau des zones de jonction entre les parties de l'isolant.

Selon une réalisation, dans les zones de jonction, les portions des parois d'extrémité d'une des parties portent des pattes destinées à coopérer par encliquetage avec des ouvertures réalisées dans les portions des parois d'extrémité de l'autre partie de l'isolant.

Selon une réalisation, les pattes présentent une forme de rampe triangulaire.

Selon une réalisation, les pattes sont moins longues que les ouvertures suivant une direction perpendiculaire aux parois latérales de sorte qu'il existe un jeu entre un bord des pattes et un bord des ouvertures correspondantes.

Selon une réalisation, les deux parties sont configurées de telle sorte qu'il existe un jeu dans les zones de jonction entre les deux parties suivant une direction perpendiculaire aux parois latérales.

Selon une réalisation, les bords des portions des parois extrémité d'une des parties situées vers l'intérieur du cadre et des zones des portions des parois d'extrémité de l'autre partie correspondant au changement d'épaisseur desdites parois d'extrémité sont chanfreinés dans des directions opposées l'une de l'autre.

Selon une réalisation, la partie de l'isolant portant l'ailette comporte un système d'encliquetage assurant une fixation d'une extrémité libre de l'ailette sur le rebord opposé au rebord portant l'ailette.

Selon une réalisation, une bordure longitudinale du rebord avant de chaque partie est configurée à une de ses extrémités pour assurer un guidage d'une extrémité d'un fil de la bobine.

Selon une réalisation, chaque partie de l'isolant comporte des empreintes de forme arrondie ménagées au niveau des angles entre les portions des parois d'extrémité et les parois latérales pour faciliter un enroulement d'un fil de la bobine.

Selon une réalisation, chaque partie de l'isolant comporte en outre des rainures ménagées dans au moins un des rebords pour le passage du vernis au niveau de la bobine.

L'invention a également pour objet un stator ou un rotor de machine électrique comportant des dents issues d'une culasse autour desquelles est positionné un isolant de bobine en deux parties selon l'invention portant une bobine.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre un isolant de bobine selon l'état de la technique destiné à être monté autour d'une dent d'un stator;
Les figures 2a et 2b montrent respectivement une représentation schématique d'un stator nu et d'un stator comportant des bobines montées sur des dents par l'intermédiaire d'un isolant de bobine selon l'invention ;
Les figures 3 et 4 montrent des vues en perspective des deux parties de l'isolant de bobine selon l'invention autour d'une dent du stator respectivement en position assemblée et désassemblée;
La figure 5 montre une vue en perspective des différents éléments composant l'isolant de bobine selon l'invention;
Les figures 6a et 6b montrent des vues en perspective de chaque partie de l'isolant de bobine selon l'invention;
La figure 7 montre une vue en coupe d'une zone de jonction entre les deux parties de l'isolant de bobine selon l'invention;
Les figures 8a et 8b montrent respectivement des vues de face et de côté de la partie de l'isolant de bobine selon l'invention portant les pattes de fixation;
La figure 9 montre une vue de dessus de l'isolant de bobine selon l'invention monté sur une dent du stator;
Les figures 10a et 10b représentent respectivement une vue de côté et une vue en perspective de l'isolant de bobine selon l'invention autour duquel est enroulé une bobine;
La figure 11 montre une vue détaillée d'une patte portée par un rebord d'une partie de l'isolant de bobine selon l'invention coopérant avec une ouverture ménagée dans l'ailette de l'isolant;
Les figures 12a et 12b montrent des vues d'un isolant de bobine selon l'invention comportant une variante du système d'encliquetage de l'ailette sur le corps de l'isolant de bobine;
La figure 13 montre un autre mode de réalisation de l'isolant de bobine selon l'invention suivant lequel la zone de pliage de l'ailette assure une fonction de guidage des extrémités du fil de bobine.

Les éléments identiques, similaires, ou analogues conservent les mêmes références d'une figure à l'autre.

### DESCRIPTION D'EXEMPLES DE REALISATION DE L'INVENTION

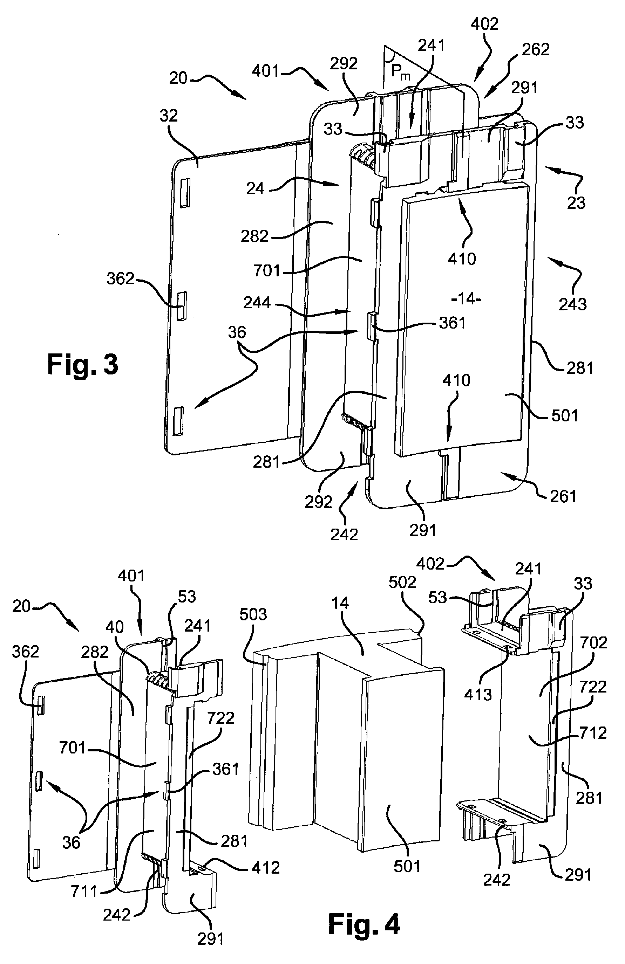

Les figures 2a et 2b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords 141-144 parallèles deux à deux, une bande de matière, correspondant à la culasse 17 existant entre le fond des encoches 15 et la périphérie externe du corps 12. Du côté de leur extrémité libre, les dents 14 pourront présenter un rebord 501 bien visible sur la figure 4 qui s'étend circonférentiellement de part et d'autre de la dent 14. Les dents 14 pourront être des dents rapportées aptes à se solidariser avec le corps 12 au moyen d'un système d'accrochage à glissière. A cet effet, les dents 14 comportent à leur base une languette 502 sur un de leurs côtés et une rainure 503 sur un côté opposé destinées à coopérer avec le corps 12 présentant des formes complémentaires.

Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles. Comme cela est visible sur la figure 2b, on monte sur les dents 14 du stator des bobines 19 préformées. Ces bobines 19 sont réalisées à partir d'un fil enroulé sur plusieurs tours. Les fils consistent en un fil électriquement conducteur, par exemple en un fil de cuivre et/ou en aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 délimitant l'encoche par l'intermédiaire d'un isolant de bobine 20. Les bobines 19 sont interconnectées entre elles, par exemple par soudure ou à l'aide d'un connecteur 22 pour former une phase U, V, W de la machine qui pourra être du type polyphasée.

L'isolant de bobine 20 est un isolant électrique réalisé ici en matière électriquement isolante et moulable telle que de la matière plastique. Comme montré sur les figures 3, 4 et 5, l'isolant 20 a un corps 23 formé par deux parties 401 et 402 assemblées autour de la dent 14 et retenues radialement par le rebord 501. Lorsque les deux parties sont assemblées (cf. figure 3), le corps 23 comporte un cadre 24 de forme globalement rectangulaire destiné à être positionné autour d'une dent 14 afin d'isoler électriquement la bobine 19 par rapport à la dent 14 métallique. Ce cadre 24 est formé par une paroi supérieure 241 et une paroi inférieure 242, appelées aussi parois d'extrémité 241, 242, sensiblement perpendiculaire à l'axe X et deux parois latérales 243 et 244 reliant les parois d'extrémité 241 et 242 entre elles. Les parois latérales 243 et 244 sont parallèles à l'axe X du stator 11.

Les parois d'extrémité 241 et 242 sont suffisamment épaisses pour soutenir efficacement la bobine sans se déchirer. Les parois latérales 243, 244 comportent chacune une fenêtre 701, 702 rectangulaire en regard de laquelle est destiné à être positionnés un élément rapporté 711, 712 prenant la forme d'un papier bon conducteur de chaleur pour favoriser le transfert de chaleur entre la dent 14 du stator et les bobines 19. L'élément rapporté 711, 712 pourra être moins épais que le corps 23 et donc que les parties 401, 402.

Les parois d'extrémité 241, 242 sont destinées à supporter les extrémités des bobinages dépassant axialement de part et d'autre d'une dent 14 appelées chignons; tandis que les parois latérales 243, 244 associées aux éléments 711, 712 sont destinées à supporter les côtés des bobines 19.

Le corps 23 comporte en outre un rebord avant 261 et un rebord arrière 262 définissant une gorge de montage de la bobine 19. Le rebord arrière 262 est destiné à être positionné à proximité de la culasse 17 tandis que le rebord avant 261 est situé du côté de l'extrémité libre d'une dent 14, c'est-à-dire du côté de la périphérie externe du rotor (non représenté).

Chaque rebord 261, 262 comporte deux bordures longitudinales référencées 281 pour le rebord avant 261 et 282 pour le rebord arrière 262. Chaque rebord 261, 262 comporte également deux bordures transversales référencées 291 pour le rebord avant 261 et 292 pour le rebord arrière 262 reliant entre elles les bordures longitudinales 281, 282 de chaque rebord.

Comme bien visible sur les figures 3, 4 et 5, le corps 23 est réalisé en deux parties 401, 402 séparées verticalement suivant un plan Pm (cf. figure 3) sensiblement médian de l'isolant de bobine parallèle aux parois latérales 243, 244 passant par les parois d'extrémité 241, 242.

Ainsi, chaque partie 401, 402 comporte une paroi latérale 243, 244 comportant une fenêtre 701, 702 et les bordures longitudinales 281, 282 du rebord avant 261 et du rebord arrière 262 correspondantes. Chaque partie 401, 402 de l'isolant comporte également une portion des parois d'extrémité 241, 242 du cadre et une portion des bordures transversales 291, 292 des rebords avant 261 et arrière 262 correspondantes. Chaque partie 401, 402 est réalisée en matière électriquement isolante rigide par exemple en matière plastique telle que du PA 6.6, qui pourra être renforcée par des fibres, telles que des fibres de verre. Les éléments rapportés 711, 712 prennent de préférence la forme d'un papier réalisé en matériau de type "Nomex", marque déposée.

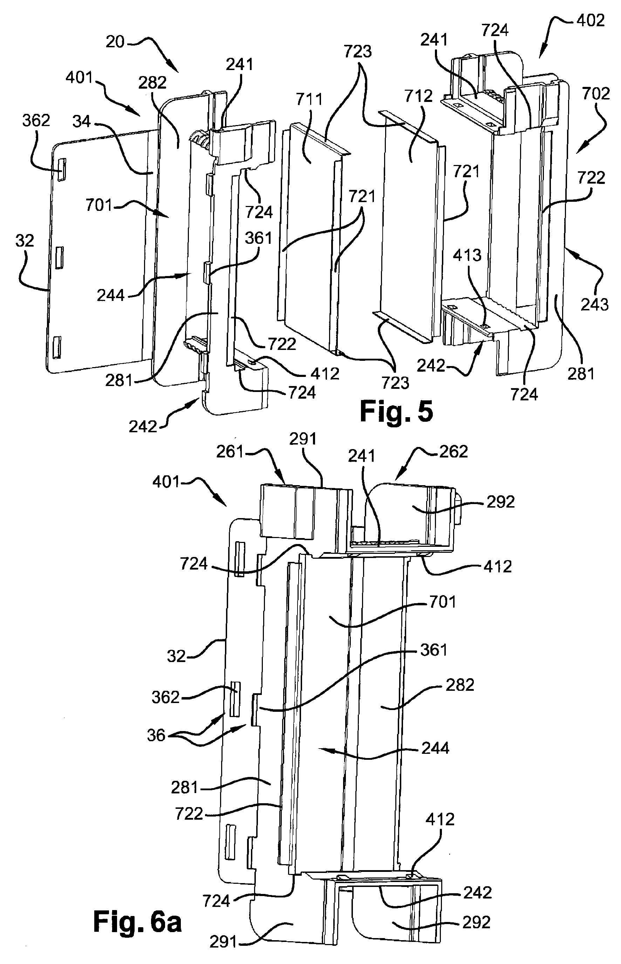

Comme cela est bien visible sur les figures 5 et 6a, la partie 401 délimite ainsi une demi-gorge définie par la paroi latérale 244 associée à l'élément rapporté 711 et les portions des parois d'extrémité 241, 242, ainsi que les bordures longitudinales 281 et 282 et les portions des bordures transversales 291, 292 correspondantes des rebords avant et arrière. La partie 401 comporte une ailette 32 située dans le prolongement de la bordure longitudinale 282 d'un des rebords, en l'occurrence le rebord arrière 262. Cette ailette 32, pliable par rapport au rebord arrière 262, est apte à assurer une isolation électrique entre deux bobines 19 montées sur deux dents 14 adjacentes. Cette ailette 32 peut être laissée libre. Dans ce cas, l'ailette 32 est maintenue rabattue contre le corps 23 de l'isolant en prenant appui contre le rebord avant 261 d'un isolant de bobine adjacent comme dans le mode de réalisation de la figure 2b. En variante, comme c'est le cas dans les figures 3, 4, 5, 6a, et 10b, l'ailette 32 est maintenue rabattue contre le corps 23 au moyen d'un système d'encliquetage 36 décrit plus en détails ci-après.

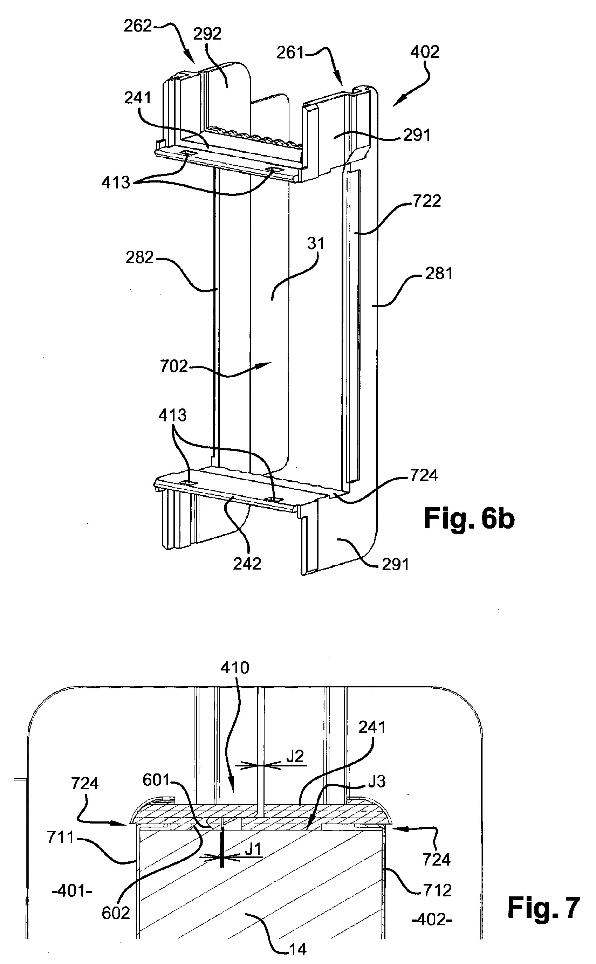

Comme montré sur les figures 5 et 6b, la partie 402 délimite une demi-gorge définie par la paroi latérale 243 associée à l'élément rapporté 712 et les portions des parois d'extrémité 241, 242, ainsi que les bordures longitudinales 281, 282 et les portions des bordures transversales 291, 292 correspondantes des rebords avant et arrière. La partie 402 comporte un talon 31 bien visible sur la figure 6b situé dans le prolongement de la bordure longitudinale 282 du rebord arrière 262. Comme cela est visible sur la figure 2b, le talon 31 est destiné à être plaqué contre un fond d'une encoche 15 du stator 11 constitué par la périphérie interne de la culasse 17 qui s'étend entre deux dents 14 successives. Ce talon 31 a pour fonction d'isoler efficacement les bobines 19 de la culasse 17, ce qui permet de limiter la perte de tension des bobines 19. A cet effet, le talon 31 présente une longueur correspondant à l'épaisseur de la culasse 17 et une largeur correspondant à la distance entre deux dents 14 adjacentes successives.

Comme cela est montré sur la figure 5 notamment, les éléments rapportés 711, 712 présentent des rebords 721 longitudinaux pliés vers l'extérieur du cadre de l'isolant destinés à coopérer avec des évidements 722 de faible profondeur réalisés le long des bords des bordures 281, 282 longitudinales situés du côté intérieur du cadre de l'isolant de bobine.

Ces éléments 711, 712 présentent également des bords 723 transversaux pliés vers l'intérieur du cadre de l'isolant destinés à coopérer avec des rainures 724 de faible profondeur ménagées dans les faces des portions des parois d'extrémité 241, 242 tournées vers l'intérieur du cadre. Ces rainures 724 présentent une orientation perpendiculaire aux rebords avant 261 et arrière 262 de l'isolant.

Une telle configuration permet de positionner aisément les éléments rapportés 711, 712 en face des fenêtres 701, 702.

Lorsque les éléments 711 et 712 sont positionnés en regard des fenêtres 701, 702 et que les parties 401 et 402 sont installées autour de la dent 14 du stator, le fil enroulé autour de la dent sera plaqué contre les éléments 711 et 712 formant les parois latérales de l'isolant ce qui va améliorer le transfert de chaleur entre les bobines 19 et la dent 14 du fait de la faible épaisseur des éléments 711, 712 et de leur propriété de bon conducteur de chaleur.

Les deux parties 401, 402 de l'isolant présentent deux zones de jonction 410 montrées sur les figures 3 et 7 au niveau desquelles les parois des deux parties 401, 402 se recouvrent l'une sur l'autre. Ces zones 410 de jonction se situent au niveau des extrémités des portions des parois d'extrémité 241, 242 et des extrémités des portions des bordures transversales 291, 292 correspondantes des deux parties 401, 402. Le recouvrement des deux parties 401, 402 entre elles permet de garantir une bonne isolation de la bobine au niveau des zones 410 de jonction.

Dans les zones 410 de jonction, les portions des parois d'extrémité 241, 242 de la partie 401 portent, sur leur face tournée vers l'intérieur du cadre de l'isolant, des pattes 412 destinées à coopérer par encliquetage avec des ouvertures 413 réalisées dans les portions des parois d'extrémité 241, 242 de l'autre partie 402 (cf. figures 4, 5, 6a, 6b et 7). En l'occurrence, la partie 401 comporte deux pattes 412 sur chacune de ses portions de paroi d'extrémité 241, 242 tandis que la partie 402 comporte deux ouvertures 413 correspondantes sur chacune de ses portions de paroi d'extrémité 241, 242.

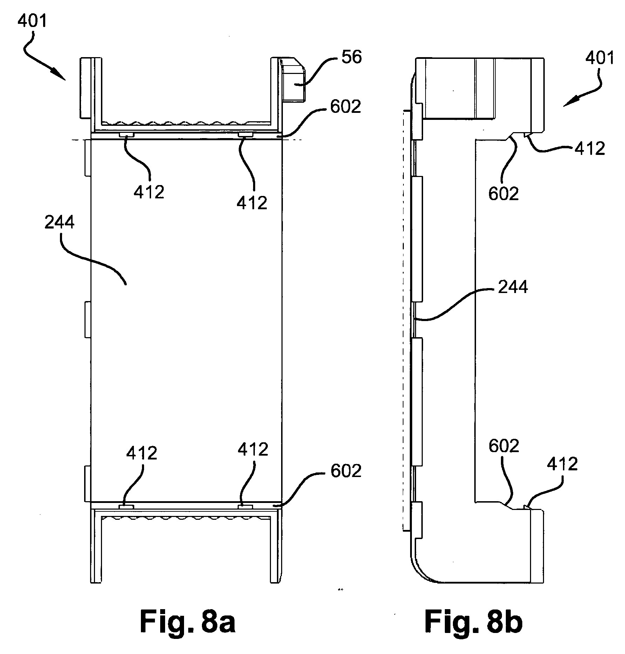

Comme montré sur les figures 7 et 8b, les pattes 412 présentent une forme de rampe triangulaire, l'épaisseur de chaque patte 412 ayant tendance à augmenter lorsqu'on s'éloigne du bord libre des portions des parois d'extrémité 241, 242. Les ouvertures 413 correspondantes sont de forme rectangulaire. En variante, toute autre forme des pattes 412 et des ouvertures 413 adaptée à un assemblage par encliquetage des deux parties 401 et 402 entre elles est envisageable. Le nombre de pattes 412 et d'ouvertures 413 pourra être adapté en fonction de l'application.

Comme cela est bien visible sur la figure 7, les pattes 412 sont moins longues que les ouvertures 413 suivant une direction perpendiculaire aux parois latérales 243, 244 de sorte qu'il existe un jeu J1 entre des côtés des pattes 412 et un bord de l'ouverture 413 correspondante. Ce jeu J1 permet de compenser l'écart entre les faces latérales 243, 244 de l'isolant et les faces de la dent 14 correspondantes.

Dans la zone 410 de jonction, les portions des parois d'extrémité 241, 242 de la partie 401 portant les pattes 412 sont situées vers l'extérieur du cadre tandis que les portions des parois d'extrémité de la partie 402 sont situées vers l'intérieur du cadre. Les parois d'extrémité 241, 242 des parties de l'isolant sont amincies au niveau des zones 410 de jonction de manière que les parois d'extrémité 242, 242 présentent une épaisseur constante, y compris dans la zone de recouvrement entre les portions des parois d'extrémité 241, 242. Une telle configuration permet un bon enroulement du fil de la bobine autour de l'isolant sur un fond de la gorge sensiblement plat sur toute sa périphérie.

Par ailleurs, comme cela ressort des figures 4 et 5, les portions des bordures transversales 291, 292 d'une des parties 401 sont destinées à être situées du côté interne de la gorge. Les portions des bordures transversales 291, 292 de la partie 402 sont destinées à être situées du côté externe de la gorge. Les portions des bordures transversales 291, 292 de la partie 402, qui présentent de préférence une surépaisseur dans les zones 410 de jonction, assurent un guidage latéral des portions des bordures 291, 292 de la partie 401.

Les deux parties 401, 402 sont configurées de telle sorte qu'il existe un jeu J2 montré sur la figure 7 dans les zones 410 de jonction entre les deux parties 401, 402 suivant une direction perpendiculaire aux faces latérales 243, 244. Ce jeu J2 sera réduit lors de l'enroulement du fil de bobine autour de l'isolant de bobine.

Par ailleurs, la configuration des parties 401, 402 de l'isolant est telle qu'un jeu J3 entre les parois d'extrémité 241, 242 et les faces de la dent 14 est quasi nul.

Pour faciliter l'assemblage, un bord 601 des portions des parois d'extrémité 241, 242 situées vers l'intérieur du cadre de la partie 402 présente un chanfrein (cf. figure 7). En outre, une zone 602 des portions des parois d'extrémité 241, 242 correspondant au changement d'épaisseur de ces parois 241, 242 est chanfreinée dans une direction opposée au chanfrein du bord de la partie 402 précité, comme montré sur les figures 7, 8a, 8b.

En variante, les pattes 412 sont portées par les portions des parois d'extrémité 241, 242 situées vers l'intérieur du cadre; tandis que les ouvertures 413 sont ménagées dans les portions des parois d'extrémité 241, 242 situées vers l'extérieur du cadre.

De préférence, comme visible sur la figure 5, l'ailette 32 se situe dans le prolongement de la bordure longitudinale 282 du rebord arrière 262 de la partie 401 via une zone 34 de raccordement entre l'ailette 32 et le rebord arrière 262. Cette zone 34 de raccordement présente une épaisseur inférieure à l'épaisseur du rebord arrière 262 de manière à constituer une zone de pliage. L'ailette 32 est ainsi pliable en direction du corps 23 de l'isolant de bobine suivant la zone 34 de pliage qui s'étend longitudinalement perpendiculairement aux parois supérieure 241 et inférieure 242.

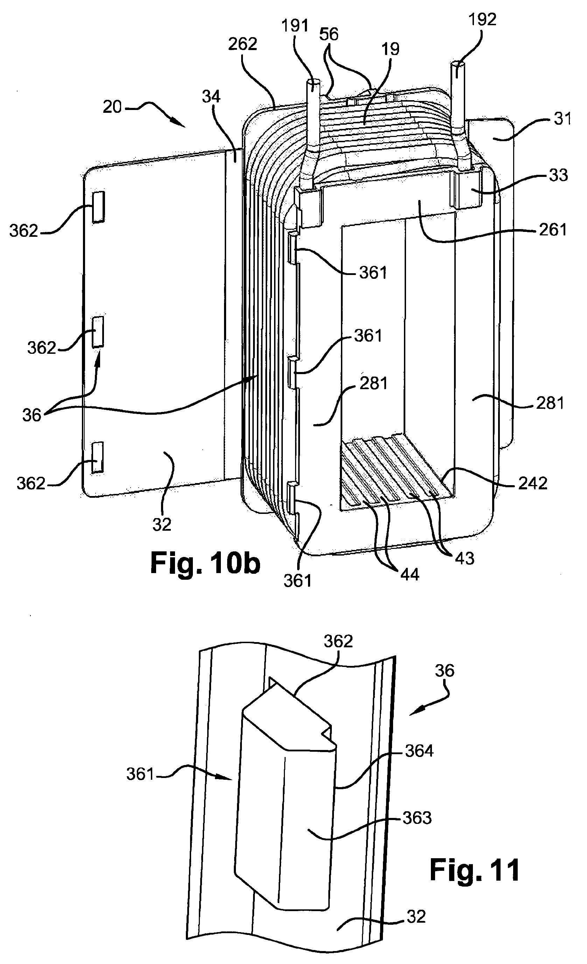

Dans les modes de réalisation des figures 3, 4, 5, 6a, 10b, et 11, l'ailette 32 est fixée au moyen d'un système d'encliquetage 36 avec la bordure longitudinale 281 du rebord avant 261 située du côté de l'ailette 32. Le système d'encliquetage 36 est formé par des pattes 361 portées par la bordure longitudinale 281 du rebord avant 261. Ces pattes 361 sont destinées à coopérer par encliquetage avec des fenêtres 362 ménagées dans la paroi de l'ailette 32. Comme visible sur la figure 11, ces pattes 361 présentent chacune la forme d'un crochet ayant un côté 363 en forme de rampe triangulaire terminée par un rebord 364 permettant de retenir l'ailette 32 après que la patte 361 a traversé une fenêtre 362. Comme dans la zone de pliage, le bord de l'ailette 32 situé du côté des fenêtres 362 est également aminci afin de permettre un plaquage optimal de l'ailette 32 contre le côté de la bobine 19. Inversement, il serait possible de prévoir des fenêtres 362 dans la bordure longitudinale 281 du rebord avant 261 tandis que les pattes 361 sont portées par un bord de l'ailette 32.

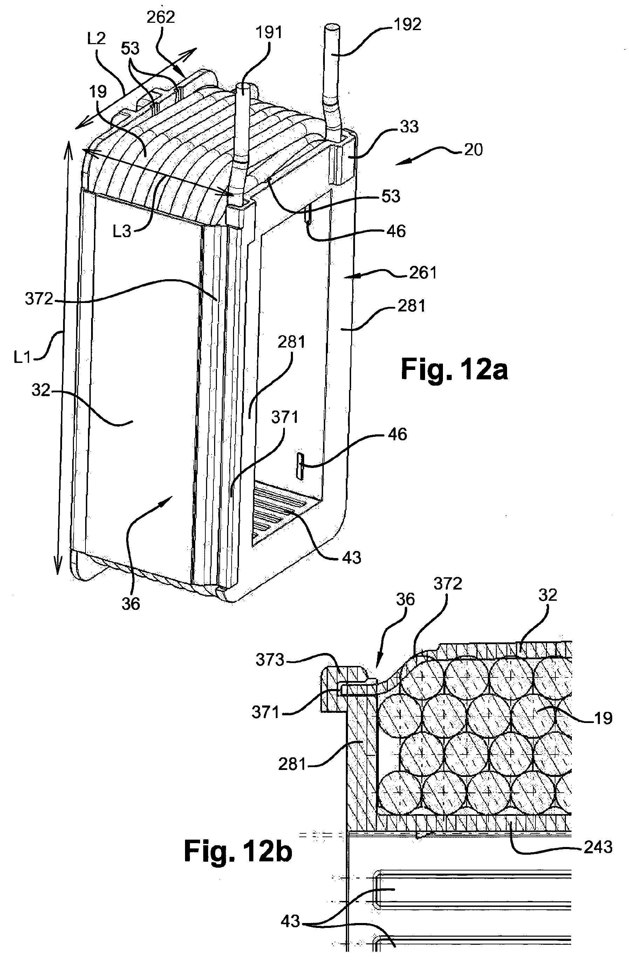

Alternativement, comme montré sur les figures 12a et 12b, le système d'encliquetage 36 est formé par une encoche 371 ménagée dans l'épaisseur du rebord avant 261. Le bord libre de l'ailette 32 forme alors une languette 372 apte à s'insérer à l'intérieur de l'encoche 371 pour maintenir l'ailette 32 rabattue contre le corps 23 de l'isolant 20. A cet effet, comme montré sur la figure 12b, la partie de l'ailette 32 formant la languette 372 présente une épaisseur amincie afin de faciliter le positionnement de la languette 372 à l'intérieure de l'encoche 371 et de garantir un bon plaquage de l'ailette 32 contre un côté latéral de la bobine 19. L'encoche 371 est réalisée dans une extrémité de la bordure longitudinale 281 du rebord avant 261 présentant une surépaisseur 373. Cette bordure longitudinale 281 présente ainsi un bord en forme en U ouvert du côté du rebord arrière 262 portant l'ailette 32.

De préférence, comme cela est représenté sur les figures 3, 4, 10b, et 12a, les bordures longitudinales 281 du rebord avant 261 de chaque partie 401, 402 de l'isolant sont configurées à une de leurs extrémités 33 pour servir de guide fil pour chaque sortie 191, 192 de la bobine 19. A cet effet, les bordures longitudinales 281 présentent à une extrémité 33 la forme d'une cuvette recevant une extrémité du fil. Le fil de la bobine 19 pourra être maintenu en position pour le soudage d'un connecteur 22 en prenant appui sur les faces latérales de la cuvette.

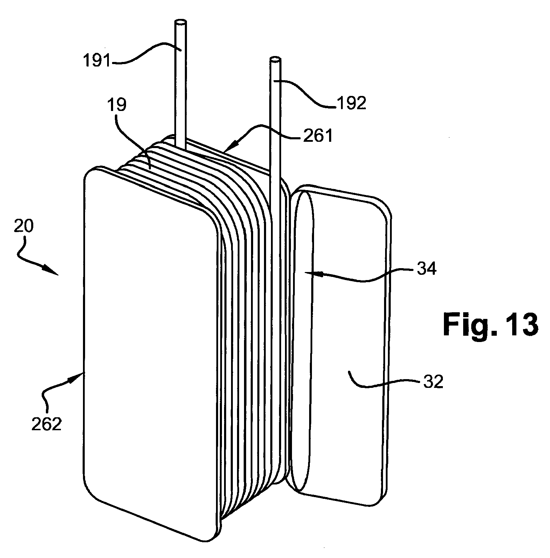

Alternativement, dans le mode de réalisation montré sur la figure 13, l'ailette 32 est issue du rebord avant 261, la zone 34 de pliage de l'ailette étant alors configurée pour le guidage d'une extrémité 191, 192 du fil de la bobine 19. Le fil est alors guidé sur toute sa longueur le long de la zone de pliage, ce qui facilite son maintien lors des opérations de soudage. A cet effet, un creux de forme complémentaire de celle du fil de la bobine 19 est ménagé dans la zone 34 de pliage d'épaisseur réduite. En variante, le rebord avant pourra être équipé d'une autre ailette 32 à zone de pliage 34 pour guidage de l'autre extrémité 192, 191 du fil de la bobine 19. Grâce à la ou aux ailettes 32 de ce mode de réalisation, on obtient une localisation plus robuste et sous contrôle de la ou des extrémités 191, 192 ce qui facilite les opérations de soudage. Cela facilite également l'assemblage de la bobine avec l'isolant de bobine. Cela permet également une réduction de la largeur de l'ailette 32.

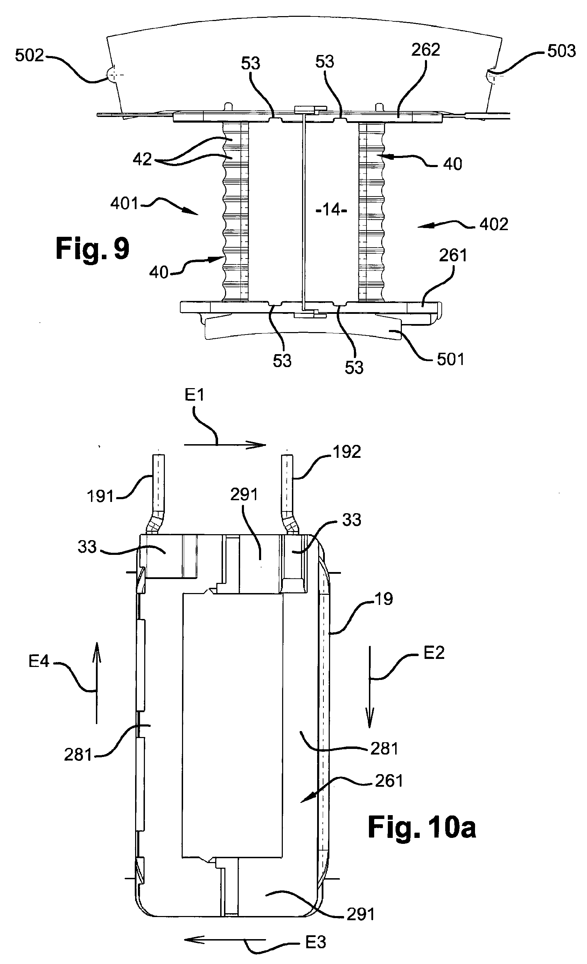

De manière optionnelle, comme cela est visible sur les figures 4 et 9 notamment, les parties 401, 402 comportent chacune des portions 40 de forme arrondies au niveau des angles entre les parois 241-244 du cadre 24 présentant en surface des empreintes 42 pour faciliter l'enroulement du fil de la bobine 19. Dans une réalisation, ces empreintes 42, qui coopèrent chacune avec un enroulement du fil, présentent une direction d'extension légèrement inclinée par rapport aux rebords avant 261 et arrière 262 suivant la forme de l'enroulement afin d'optimiser le remplissage des encoches 15 du stator 11.

Par ailleurs, comme cela est particulièrement bien visible sur la figure 10b, afin de permettre le passage d'un vernis d'imprégnation entre l'isolant 20 et la dent 14 pour la fixation de ces deux éléments 14 et 20 entre eux, des rainures borgnes 43 sont ménagées dans les faces des portions des parois d'extrémité des parties 401, 402 tournées vers l'intérieur de l'isolant 20. Ces rainures 43 s'étendent sensiblement perpendiculairement aux rebords avant 261 et arrière 262. Ces rainures 43 sont fermées, c'est-à-dire non débouchantes, du côté du rebord avant 261 afin d'éviter que le vernis d'imprégnation coule dans la partie intérieure de la machine au niveau de l'entrefer entre le rotor et le stator de celle-ci lorsque le verni est injecté depuis l'extrémité ouverte des rainures 43 située du côté de la culasse 17. Les faces internes des parois supérieure 241 et inférieure 242 présentent ainsi une alternance de rainures 43 et de nervures 44 situées entre deux rainures 43 successives. En l'occurrence, l'isolant de bobine 20 comporte cinq rainures 43 et quatre nervures 44 sur les faces internes des parois 241, 242. Les rainures 43 des parois 241, 242 sont espacées les unes des autres de sorte qu'elles ne soient pas bouchées par la culasse 17.

En outre, comme cela est montré sur les figures 4 et 9, pour faciliter l'imprégnation des fils des bobines 19, l'isolant 20 présente des rainures 53 ménagées dans les bordures transversales 291, 292 des rebords avant 261 et arrière 262 pour le passage du vernis d'imprégnation au niveau de la bobine 19. Ces rainures 53 sont ménagées du côté des rebords 261, 262 tournés vers la gorge recevant le fil de bobine. Ces rainures 53 s'entendent sensiblement perpendiculairement à la paroi supérieure 241 et à la paroi inférieure 242. En l'occurrence, chaque partie 401, 402 comporte deux rainures 53 en regard l'une de l'autre. Le vernis d'imprégnation permet d'avoir un bon contact entre les fils de la bobine 19.

Comme cela est visible sur les figures 2b et 8a, l'isolant 20 comporte en outre des protubérances 56 définissant un passage 57 pour un pion 58 d'indexage du connecteur externe 22. Chaque partie 401, 402 porte ainsi une protubérance 56 sur une face de la bordure transversale 292 du rebord arrière tournée vers l'extérieur du cadre de l'isolant. Pour faciliter l'insertion des pions 58 d'indexage entre les protubérances 56, les protubérances 56 sont conformées d'une manière telle que le passage 57 présente une forme légèrement évasée à son extrémité débouchant du côté des extrémités 191, 192 du fil de la bobine 19 (cf. figure 2b).

Toutes les formes des parties 401 et 402 de l'isolant de bobine précitées sont obtenues de préférence par moulage, les parties 401 et 402 étant avantageusement en matière moulable et électriquement isolante, telle que de la matière plastique. Toutes les dispositions précitées (rainures 43, rainures 53, talon 31 etc.) sont applicables au mode de réalisation de la figure 13.

Dans un exemple particulier de réalisation, lorsque les deux parties 401, 402 sont assemblées l'une avec l'autre, le cadre 24 présente une longueur L1 de l'ordre de 53,6mm, une largeur L2 de l'ordre de 20,75 mm, et une profondeur L3 de l'ordre de 23,5 mm (cf. figure 12a). Le talon 31 et l'ailette 32 présentent tous les deux une longueur de l'ordre de 58,6 et une largeur respectivement de l'ordre de 10,2 mm pour le talon 31 et 29,2 mm pour l'ailette 32. Les rebords avant 261 et arrière 262 présentent une hauteur par rapport aux parois 241-244 du cadre 24 de l'ordre de 9,7 mm. Dans cette réalisation, les bordures longitudinales 282 du rebord arrière 262 sont de largeur différente. Plus précisément la bordure 282 associée à l'ailette 32 présente une largeur de 8 mm et celle associée au talon 31 présente une largeur de 7 mm. Le talon 31 présente une épaisseur de 0, 4 mm, tandis que l'ailette présente une épaisseur de 0, 8 mm et les bordures longitudinales 282, 281 et transversales 291, 292 une épaisseur de 1, 5 mm.

Les portions arrondies des empreintes présentent un rayon de courbure de l'ordre de 2mm. Les éléments rapportés 711, 712 prenant la forme d'un papier ont une épaisseur fine de l'ordre de 0.3mm pour faciliter le transfert de chaleur entre la bobine 19 et la dent 14. Les parois supérieures 241 et inférieure 242 ont une épaisseur de l'ordre de 1.5 mm au niveau d'une nervure 44. La profondeur des rainures borgnes 43 est de l'ordre de 0.5mm. Le fil utilisé pour réaliser les bobines 19 présente par exemple un diamètre de l'ordre de 2mm.

En variante, l'isolant 20 de bobine pourra être réalisé en deux parties suivant un plan médian transversal perpendiculaire à l'axe X.

On décrit ci-après une opération de bobinage du stator 11 selon l'invention.

Dans un premier temps, les éléments rapportés 711, 712, sont positionnés en regard des fenêtres 701, 702 des parois latérales des parties 401 et 402. A cet effet, les rebords 721 longitudinaux sont positionnés de manière coopérer avec des évidements 722 réalisés le long des bords des bordures 281, 282 longitudinales. Les rebords 723 transversaux sont positionnés de manière à coopérer avec les rainures 724 ménagées dans les faces des portions des parois d'extrémité 241, 242 tournées vers l'intérieur du cadre.

Lors de l'assemblage de l'isolant, les parties 401 et 402 portant les éléments rapportés 711 et 712 sont positionnées autour de la dent 14 et rapprochées l'une de l'autre. Les surépaisseurs des bordures transversales 291, 292 de la partie 402 assurent, dans les zones 410 de jonction entre les deux parties, un guidage des portions des bordures transversales 291, 292 intérieures de la partie 401.

Les portions des parois d'extrémité 241, 242 de la partie 401 portant les pattes 412 situées vers l'extérieur du cadre glissent sur le bord de la partie 402 portant les ouvertures 413. Les pattes 412 de la partie 401 en appui sur le bord de la partie 402 ont alors tendance à déformer les portions des parois d'extrémité 241, 242 de la partie 401 dans une direction éloignée de la dent 14 du stator jusqu'à ce que les pattes 412 s'insèrent complètement à l'intérieur des ouvertures 413.

Lorsque les pattes 412 coopèrent avec les ouvertures 413, elles assurent un maintien des deux parties 401 et 402. Un maintien latéral est également assuré par les surépaisseurs des bordures transversales 291, 292 de la partie 402. L'isolant de bobine ainsi formé est retenu radialement sur le stator par le rebord 501 de la dent 14.

Comme montré sur la figure 7, le jeu J3 entre les parois d'extrémité de l'isolant et les faces de la dent correspondante est quasi nul tandis qu'il existe un jeu J2 entre les parois latérales 243, 244 de l'isolant et les parois de la dent 14 correspondantes. Un enroulement du fil est alors effectué suivant les directions E1-E4 (cf. figure 10a) autour du cadre 24 à l'intérieur de la gorge délimitée par l'isolant de bobine, de sorte que les spires coopèrent avec les empreintes 42 de l'isolant de bobine. Le bobinage est effectué par exemple sur quatre couches d'enroulements superposées les unes sur les autres. Le bobinage est effectué de manière que les chignons des bobines 19 se situent sur les parois d'extrémité 241 et 242 et que les côtés des bobines 19 se situent sur les parois latérales 243, 244 de l'isolant contre les éléments rapportés 711, 712 réalisés en Nomex. Cette opération de bobinage a pour effet de réduire le jeu J2.

Les extrémités 191, 192 du fil de chaque bobine 19 sont positionnées dans les guides fils ménagés dans les extrémités 33 des bordures longitudinales du rebord avant 261. Alternativement, si l'ailette 32 est issue du rebord avant 261, on replie l'ailette 32 de sorte que la zone 34 de pliage configurée à cet effet assure un guidage et un bon maintien du fil de sortie de la bobine.

Le talon 31 de chaque dent 14 est alors positionné de manière à être plaqué contre la périphérie interne de la culasse 17 s'étendant entre deux dents 14 successives. L'ailette 32 est rabattue vers le bobinage de manière à constituer un mur électriquement isolant entre deux bobines 19 adjacentes. La figure 2b montre ainsi des isolants de bobine dont l'ailette 3 qui est libre est maintenue repliée par un rebord avant 261 d'un isolant 20 adjacent. S'il y a lieu, en variante, l'ailette 32 pourra être maintenue en position rabattue au moyen d'un des systèmes d'encliquetage 36 précités.

On effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 43. Le côté fermé des rainures borgnes 43 situé de la périphérie externe du rotor permet d'éviter que le vernis s'écoule à l'intérieur de la machine. Le passage du vernis entre les faces internes de l'isolant 20 et les faces externes de la dent 14 permet de fixer efficacement l'isolant 20 de bobine sur la dent 14. On introduit également du vernis à l'intérieur des rainures 53 réalisées dans les bordures transversales des rebords 261, 262 de manière à imprégner et maintenir ensemble les fils des bobines 19. On notera que les rainures 43 des parois 241, 242 sont éloignées les unes des autres en fonction de l'épaisseur de la culasse 17. Ces rainures 43, non référencées à la figure 2b, ne sont pas masquées par la culasse 17.

En variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation.

Ensuite, le verni est refroidi en se polymérisant. Le vernis est par exemple à base de résine époxy, de résine polyester non saturée ou de résine silicone. Bien entendu, de manière connue, on peut ajouter aux résines des accélérateurs pour diminuer la durée de l'imprégnation.

Une fois la phase d'imprégnation du bobinage du stator 11 terminée, le connecteur 22 externe est ensuite positionné au-dessus des bobines 19 pour assurer une connexion des bobines 19 entre elles suivant une configuration particulière comme cela est montré sur la figure 2b. Ce connecteur 22 est positionné de sorte que ses pieds 61 reposent sur un rebord de la culasse 17 et que ses pions 58 d'indexage s'insèrent entre les protubérances 56. Les extrémités 191, 192 des fils des bobines 19 sont ensuite soudées à des pattes 62 de soudage appartenant au connecteur 22 au moyen d'une électrode de soudage. Le connecteur 22 est ainsi maintenu en position contre le rebord d'extrémité de la culasse 17.

L'ensemble est ensuite positionné à l'intérieur d'un boîtier par frettage, ce boîtier pouvant par exemple être refroidi par eau.

Ainsi qu'il ressort de la description et des dessins que les ailettes 32 constituent un mur électriquement isolant entre deux bobines 19 consécutives. En outre ces ailettes 32 sont issues de l'isolant 20, ici en matière plastique moulable, en sorte que la fabrication de l'isolant 20, avantageusement équipé d'un talon 31, est aisée. Le montage de l'isolant 20 sur sa dent associée 14 et le soudage des extrémités 191, 192 est également aisé grâce à la configuration en deux parties de l'isolant 20 avantageusement configuré pour guider les extrémités 191, 192 de la bobine 19. Le vernis d'imprégnation permet une bonne fixation de la bobine sur sa dent 14 associée grâce aux rainures 43, qui sont borgnes pour éviter de polluer l'entrefer entre le stator et le rotor de la machine électrique. Plus précisément, la culasse 17 est dans cet exemple de réalisation de forme annulaire et constitue un support pour les dents 14 s'étendant vers l'intérieur en direction de l'axe X. Les dents 14 sont réparties circonférentiellement de manière régulière et de manière connue un entrefer existe entre les extrémités libres des dents 14 et la périphérie externe du rotor de la machine électrique tournante. Cet entrefer ne sera pas pollué par le vernis d'imprégnation. Les talons 31 permettent d'augmenter la puissance de la machine électrique. Les ailettes 32 permettent d'augmenter également la puissance de la machine électrique tout en rendant celle-ci plus fiable et compacte.

Le rotor de la machine électrique pourra être un rotor à griffes comme dans le document FR 2 890 798. En variante le rotor pourra être à pôles saillants. En variante, le rotor pourra être un rotor à aimants permanents comme dans les documents EP 0 803 962 et EP 0 831 580 précités. En variante, le rotor à griffes ou à pôles saillants pourra comporter également des aimants permanents. En variante, les dents 14 pourront ne pas être réparties circonférentiellement de manière régulière.

Il ressort également de la description et des dessins que les ailettes 32 et les talons 31 sont moins épais que les bordures 281, 282, 291, 292 des rebords 261, 262, le talon 31 étant d'épaisseur moindre que l'ailette 32. On notera que le connecteur 22 comporte un corps de forme annulaire en matière électriquement isolante, ici doté de pieds 61, dans lequel sont noyé des pistes électriquement conductrices en forme d'anneau, par exemple en cuivre. Chaque piste du connecteur 22 est dotée de pattes 62 de soudage pour être soudée aux extrémités 191, 192 des bobines 19. Dans ce mode de réalisation les pistes sont empilées les unes sur les autres et il est prévu quatre pistes, l'une des pistes constituant le point neutre d'un montage en étoile des phases de la machine électrique tournante ici du type triphasé.

On notera que la piste constituant le point neutre comporte un nombre de pattes 62 égal au nombre de bobines 19 et supérieur au nombre de pattes 62 des autres pistes isolées les unes des autres par la matière électriquement isolante, telle que de la matière plastique, du corps du connecteur 22, les pattes 62 de soudage étant apparentes. Bien entendu le nombre de pistes dépend des applications, cinq pistes où six pistes pourront être prévues pour une machine électrique respectivement à quatre ou cinq phases. On notera que la localisation des extrémités 191, 192 permet d'allonger la longueur des pattes de soudage 62, ce qui facilite le passage des électrodes de soudage.

L'homme du métier pourra bien entendu modifier la configuration de l'isolant 20 de bobine ainsi que son application sans sortir du cadre de l'invention. Ainsi, l'invention s'applique ici à un stator 11 mais pourrait également s'appliquer à un rotor d'une machine électrique tournante. En effet, tout comme le stator 11, le rotor comporte une culasse et des dents issues de la culasse. Dans le cas du stator 11, la culasse 17 constitue la périphérie externe du corps du stator. Dans le cas du rotor, la culasse constitue la périphérie interne du corps du rotor. Dans les deux cas, l'isolant 20 de bobine peut être positionné autour d'une dent du rotor ou du stator.

En variante, l'isolant 20 de bobine comporte également d'autres ailettes issues d'au moins une des bordures transversales des rebords 261, 262 afin de couvrir les chignons des bobines 19 portés par les parois supérieure 241 et inférieure 242.

On note que les termes "inférieur" et "supérieur" sont entendus par rapport à un isolant 20 de bobine reposant sur un support plat, les parois latérales 243, 244 étant perpendiculaires au support. La paroi inférieure 242 est la paroi la plus proche du support tandis que la paroi supérieure 241 est la paroi la plus éloignée du support, comme cela est représenté sur la figure 3. Les faces "internes" des parois 241-244 sont tournées vers l'intérieur du cadre 24; tandis que les faces "externes" des parois 241-244 sont tournées vers l'extérieur du cadre 24.

L'ailette 32 pourra être destinée à être pliée et laissée libre comme dans la figure 2b. L'ailette 32 pourra être fixée sur la bordure longitudinale concernée du rebord arrière 262 au moyen d'un système d'encliquetage 36 du type de celui des figures 3 ou 12. L'autre bordure longitudinale du rebord arrière 262 pourra être en variante équipé du talon 31. En variante, cette autre bordure longitudinale n'est pas équipée de talon comme représenté à la figure 13. Il pourra en être de même dans le mode de réalisation des figures 3 à 5.

Il est à noter que le talon 31 pourra se raccorder à la bordure longitudinale 282 du bord arrière 262 par une zone de pliage d'épaisseur réduite du type de la zone 34.

Le connecteur 22 peut avoir une autre forme, les pistes pouvant être concentrique.

La machine électrique tournante peut être dotée d'un générateur de courant inversé comme décrit dans le document FR 2 918 512. Dans ce cas le rotor induit de ce générateur pourra comporter une culasse et des dents pour, de manière précitée, montage des isolants de bobines selon l'invention. Il en est de même du rotor 4' de la figure 16 de ce document alimenté par le rotor induit du générateur de courant inversé.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR 12/54733 déposée le 24/05/2012.

L'isolant 20 peut être positionné autour d'une dent rapportée ou d'un seul tenant avec la culasse d'un stator ou d'un rotor de machine électrique.

## Revendications

1. Isolant (20) de bobine destiné à être positionné autour d'une dent (14) d'un stator ou d'un rotor d'une machine électrique, **caractérisé en ce qu'**il comporte un corps (23) ayant des parois latérales (243, 244) et des parois d'extrémité (241, 242) formant un cadre (24), les parois latérales (243, 244) comportant chacune une fenêtre (701, 702) en regard de laquelle est destiné à être positionné un élément (711, 712) rapporté réalisé dans un matériau souple bon conducteur de chaleur, ainsi qu'un rebord avant (261) et un rebord arrière (262) formés chacun par des bordures longitudinales (281, 282) reliées entre elles par des bordures transversales (291, 292), ces rebords avant (261) et arrière (262) définissant une gorge de montage pour l'enroulement d'une bobine (19), et **en ce que** le corps (23) est réalisé en deux parties (401, 402) séparées verticalement suivant un plan (Pm) sensiblement parallèle aux parois latérales (243, 244) et passant par les parois d'extrémité (241, 242) du cadre (24).

2. Isolant selon la revendication 1, **caractérisé en ce que** chaque partie (401, 402) comporte:
- une paroi latérale (243, 244) du cadre (24) ayant une fenêtre (701, 702) et des bordures longitudinales (281, 282) du rebord avant (261) et du rebord arrière (262) correspondantes, et
- une portion des parois d'extrémité (241, 242) du cadre et une portion des bordures transversales (291, 292) du rebord avant (261) et du rebord arrière (262) correspondantes.

3. Isolant selon la revendication 2, **caractérisé en ce que** les éléments (711, 712) rapportés de forme globalement rectangulaire présentent des rebords (721) longitudinaux pliés vers l'extérieur du cadre (24) destinés à coopérer avec des évidements (722) réalisés dans les bordures (281, 282) longitudinales des rebords de chaque partie (401, 402) de l'isolant.

4. Isolant selon la revendication 2 ou 3, **caractérisé en ce que** les éléments (711, 712) rapportés de forme globalement rectangulaire présentent des rebords (723) transversaux pliés vers l'intérieur du cadre (24) destinés à coopérer avec des rainures (724) ménagées dans les portions des parois d'extrémité (241, 242) de chaque partie de l'isolant.

5. Isolant selon l'une des revendications 2 à 4, **caractérisé en ce qu'**une des parties (401) porte une ailette (32) pliable par rapport au corps (23) apte à assurer une isolation électrique entre deux bobines (19) montées sur deux dents (14) adjacentes, cette ailette (32) étant située dans le prolongement d'une bordure longitudinale d'un des rebords (261, 262).

6. Isolant selon l'une des revendications 2 à 5, **caractérisé en ce qu'**une des parties (402) comporte un talon (31) situé dans le prolongement d'une bordure longitudinale du rebord arrière (262) destiné à être plaqué contre un fond d'une encoche (15) du stator ou du rotor.

7. Isolant selon l'une des revendications 1 à 6, **caractérisé en ce que** les deux parties (401, 402) présentent des zones (410) de jonction au niveau desquelles les deux parties (401, 402) se recouvrent l'une sur l'autre.

8. Isolant selon la revendication 7, **caractérisé en ce que** les zones (410) de jonction se situent au niveau des extrémités des portions des parois d'extrémité (241, 242) et des portions des bordures transversales (291, 292) des rebords (261, 262) des deux parties (401, 402) de l'isolant.

9. Isolant selon la revendication 7 ou 8, **caractérisé en ce que** les portions des parois d'extrémité (241, 242) sont amincies au niveau des zones (410) de jonction entre les parties (401, 402) de l'isolant.

10. Isolant selon l'une des revendications 7 à 9, **caractérisé en ce que**, dans les zones (410) de jonction, les portions des parois d'extrémité (241, 242) d'une des parties (401) portent des pattes (412) destinées à coopérer par encliquetage avec des ouvertures (213) réalisées dans les portions des parois d'extrémité (241, 242) de l'autre partie (402) de l'isolant.

11. Isolant selon l'une des revendications 7 à 10, **caractérisé en ce que** les deux parties (401, 402) sont configurées de telle sorte qu'il existe un jeu (J2) dans les zones (410) de jonction entre les deux parties (401, 402) suivant une direction perpendiculaire aux parois latérales (243, 244).

12. Isolant selon l'une des revendications 7 à 11, **caractérisé en ce que** les bords (601) des portions des parois extrémité (241, 242) d'une des parties (402) situées vers l'intérieur du cadre et des zones (602) des portions des parois d'extrémité (241, 242) de l'autre partie (401) correspondant au changement d'épaisseur desdites parois d'extrémité sont chanfreinés dans des directions opposées l'une de l'autre.

13. Isolant selon l'une des revendications 1 à 12, **caractérisé en ce que** chaque partie (401, 402) de l'isolant comporte des empreintes (42) de forme arrondie ménagées au niveau des angles entre les portions des parois d'extrémité (241, 242) et les parois latérales (243, 244) pour faciliter un enroulement d'un fil de la bobine (19).

14. Isolant selon l'une des revendications 1 à 13, **caractérisé en ce que** chaque partie (401, 402) de l'isolant comporte en outre des rainures (53) ménagées dans au moins un des rebords (261, 262) pour le passage du vernis au niveau de la bobine (19).

15. Stator ou rotor de machine électrique comportant des dents (14) issues d'une culasse (17) autour desquelles est positionné un isolant (20) de bobine en deux parties (401, 402) selon l'une des revendications précédentes portant une bobine (19).

## Patentansprüche

1. Spulenisolierer (20), der dazu bestimmt ist, um einen Zahn (14) eines Stators oder eines Rotors einer elektrischen Maschine positioniert zu werden, **dadurch gekennzeichnet, dass** er einen Körper (23) mit Seitenwänden (243, 244) und Endwänden (241, 242), die einen Rahmen (24) bilden, umfasst, wobei die Seitenwände (243, 244) jeweils ein Fenster (701, 702) umfassen, gegenüber dem ein aufgesetztes Element (711, 712) positioniert werden soll, das aus einem gut wärmeleitenden biegsamen Material hergestellt ist, sowie mit einem vorderen Rand (261) und einem hinteren Rand (262), die jeweils von Längsumrandungen (281, 282) gebildet sind, die miteinander durch Querumrandungen (291, 292) verbunden sind, wobei diese vorderen (261) und hinteren (262) Ränder eine Montagerille für das Aufwickeln einer Spule (19) definieren, und dass der Körper (23) aus zwei Teilen (401, 402) hergestellt ist, die vertikal entlang einer Ebene (Pm) im Wesentlichen parallel zu den Seitenwänden (243, 244), die durch die Endwände (241, 242) des Rahmens (24) verläuft, getrennt sind.

2. Isolierer nach Anspruch 1, **dadurch gekennzeichnet, dass** jeder Teil (401, 402) umfasst:
- eine Seitenwand (243, 244) des Rahmens (24) mit einem Fenster (701, 702) und entsprechenden Längsumrandungen (281, 282) des vorderen Randes (261) und des hinteren Randes (262), und
- einen Abschnitt der Endwände (241, 242) des Rahmens und einen Abschnitt der entsprechenden Querumrandungen (291, 292) des vorderen Randes (261) und des hinteren Randes (262).

3. Isolierer nach Anspruch 2, **dadurch gekennzeichnet, dass** die aufgesetzten Elemente (711, 712) von global rechteckiger Form Längsränder (721) aufweisen, die nach außen zum Rahmen (24) gefalzt und dazu bestimmt sind, mit Ausnehmungen (722) zusammenzuwirken, die in den Längsumrandungen (281, 282) der Ränder jedes Teils (401, 402) des Isolierers hergestellt sind.

4. Isolierer nach Anspruch 2 oder 3, **dadurch gekennzeichnet, dass** die aufgesetzten Elemente (711, 712) von global rechteckiger Form Querränder (723) aufweisen, die zum Inneren des Rahmens (24) gefalzt und dazu bestimmt sind, mit Nuten (724) zusammenzuwirken, die in den Abschnitten der Endwände (241, 242) jedes Teils des Isolierers ausgenommen sind.

5. Isolierer nach einem der Ansprüche 2 bis 4, **dadurch gekennzeichnet, dass** einer der Teile (401) einen zum Körper (23) faltbaren Flügel (32) trägt, der geeignet ist, eine elektrische Isolierung zwischen zwei Spulen (19) zu gewährleisten, die auf zwei aneinandergrenzenden Zähnen (14) montiert sind, wobei dieser Flügel (32) in der Verlängerung einer Längsumrandung eines der Ränder (261, 262) angeordnet ist.

6. Isolierer nach einem der Ansprüche 2 bis 5, **dadurch gekennzeichnet, dass** einer der Teile (402) eine Ferse (31) umfasst, die sich in der Verlängerung einer Längsumrandung des hinteren Randes (262) befindet und dazu bestimmt ist, an einen Boden einer Kerbe (15) des Stators oder des Rotors angelegt zu werden.

7. Isolierer nach einem der Ansprüche 1 bis 6, **dadurch gekennzeichnet, dass** die beiden Teile (401, 402) Verbindungszonen (410) aufweisen, in deren Bereich die beiden Teile (401, 402) einander überdecken.

8. Isolierer nach Anspruch 7, **dadurch gekennzeichnet, dass** sich die Verbindungszonen (410) im Bereich der Enden der Abschnitte der Endwände (241, 242) und der Abschnitte der Querumrandungen (291, 292) der Ränder (261, 262) der beiden Teile (401, 402) des Isolierers befinden.

9. Isolierer nach Anspruch 7 oder 8, **dadurch gekennzeichnet, dass** die Abschnitte der Endwände (241, 242) im Bereich der Verbindungszonen (410) zwischen den Teilen (401, 402) des Isolierers verjüngt sind.

10. Isolierer nach einem der Ansprüche 7 bis 9, **dadurch gekennzeichnet, dass** in den Verbindungszonen (410) die Abschnitte der Endwände (241, 242) eines der Teile (401) Laschen (412) tragen, die dazu bestimmt sind, durch Einrasten mit Öffnungen (213) zusammenzuwirken, die in den Abschnitten der Endwände (241, 242) des anderen Teils (402) des Isolierers hergestellt sind.

11. Isolierer nach einem der Ansprüche 7 bis 10, **dadurch gekennzeichnet, dass** die beiden Teile (401, 402) derart ausgeführt sind, dass ein Spiel (J2) in den Verbindungszonen (410) zwischen den beiden Teilen (401, 402) in eine Richtung senkrecht auf die Seitenwände (243, 244) vorhanden ist.

12. Isolierer nach einem der Ansprüche 7 bis 11, **dadurch gekennzeichnet, dass** die Ränder (601) der Abschnitte der Endwände (241, 242) eines der Teile (402), die sich zum Inneren des Rahmens befinden, und der Zonen (602) der Abschnitte der Endwände (241, 242) des anderen Teils (401) entsprechend der Dickenänderung der Endwände in zueinander entgegengesetzte Richtungen abgeschrägt sind.

13. Isolierer nach einem der Ansprüche 1 bis 12, **dadurch gekennzeichnet, dass** jeder Teil (401, 402) des Isolierers Abdrucke (42) von abgerundeter Form umfasst, die im Bereich der Winkel zwischen den Abschnitten der Endwände (241, 242) und den Seitenwänden (243, 244) ausgenommen sind, um ein Aufwickeln eines Drahtes der Spule (19) zu erleichtern.

14. Isolierer nach einem der Ansprüche 1 bis 13, **dadurch gekennzeichnet, dass** jeder Teil (401, 402) des Isolierers ferner Nuten (53) umfasst, die in mindestens einem der Ränder (261, 262) für den Durchgang des Lacks im Bereich der Spule (19) ausgenommen sind.

15. Stator oder Rotor einer elektrischen Maschine, umfassend Zähne (14) die von einem Joch (17) ausgehen, um die ein Isolierer (20) einer Spule aus zwei Teilen (401, 402) nach einem der vorhergehenden Ansprüche, der eine Spule (19) trägt, positioniert ist.

## Claims

1. Coil insulator (20) intended to be positioned around a tooth (14) of a stator or of a rotor of an electric machine, **characterized in that** it comprises a body (23) having lateral walls (243, 244) and end walls (241, 242) forming a frame (24), the lateral walls (243, 244) each comprising a window (701, 702) facing which is intended to be positioned an added element (711, 712) produced in a good heat-conducting flexible material, and a front flange (261) and a rear flange (262) each formed by longitudinal edging strips (281, 282) linked together by transverse edging strips (291, 292), these front (261) and rear (262) flanges defining a mounting recess for winding a coil (19), and **in that** the body (23) is produced in two parts (401, 402) separated vertically along a plane (Pm) substantially parallel to the lateral walls (243, 244) and passing through the end walls (241, 242) of the frame (24).

2. Insulator according to Claim 1, **characterized in that** each part (401, 402) comprises:
- a lateral wall (243, 244) of the frame (24) having a window (701, 702) and longitudinal edging strips (281, 282) of the corresponding front flange (261) and rear flange (262), and
- a portion of the end walls (241, 242) of the frame and a portion of the transverse edging strips (291, 292) of the corresponding front flange (261) and rear flange (262).

3. Insulator according to Claim 2, **characterized in that** the added elements (711, 712) of overall rectangular form have longitudinal flanges (721) folded to the outside of the frame (24) intended to cooperate with voids (722) produced in the longitudinal edging strips (281, 282) of the flanges of each part (401, 402) of the insulator.

4. Insulator according to Claim 2 or 3, **characterized in that** the added elements (711, 712) of overall rectangular form have transverse flanges (723) folded to the inside of the frame (24) intended to cooperate with grooves (724) formed in the portions of the end walls (241, 242) of each part of the insulator.

5. Insulator according to one of Claims 2 to 4, **characterized in that** one of the parts (401) bears a fin (32) that can be folded relative to the body (23) capable of insuring an electrical insulation between two coils (19) mounted on two adjacent teeth (14), this fin (32) being situated in the extension of a longitudinal edging strip of one of the flanges (261, 262).

6. Insulator according to one of Claims 2 to 5, **characterized in that** one of the parts (402) comprises a heel (31) situated in the extension of a longitudinal edging strip of the rear flange (262) intended to be pressed against a bottom of a notch (15) of the stator or of the rotor.

7. Insulator according to one of Claims 1 to 6, **characterized in that** the two parts (401, 402) have joining zones (410) where the two parts (401, 402) overlap one another.

8. Insulator according to Claim 7, **characterized in that** the joining zones (410) are situated at the ends of the portions of the end walls (241, 242) and of the portions of the transverse edging strips (291, 292) of the flanges (261, 262) of the two parts (401, 402) of the insulator.

9. Insulator according to Claim 7 or 8, **characterized in that** the portions of the end walls (241, 242) are thinned in the joining zones (410) joining the parts (401, 402) of the insulator.

10. Insulator according to one of Claims 7 to 9, **characterized in that**, in the joining zones (410), the portions of the end walls (241, 242) of one of the parts (401) bear tabs (412) intended to cooperate by snap-fitting with holes (213) produced in the portions of the end walls (241, 242) of the other part (402) of the insulator.

11. Insulator according to one of Claims 7 to 10, **characterized in that** the two parts (401, 402) are configured in such a way that there is a gap (J2) in the joining zones (410) joining the two parts (401, 402) in a direction at right angles to the lateral walls (243, 244).

12. Insulator according to one of Claims 7 to 11, **characterized in that** the edges (601) of the portions of the end walls (241, 242) of one of the parts (402) situated towards the interior of the frame and zones (602) of the portions of the end walls (241, 242) of the other part (401) corresponding to the change of thickness of said end walls are chamfered in directions opposite to one another.

13. Insulator according to one of Claims 1 to 12, **characterized in that** each part (401, 402) of the insulator comprises rounded indentations (42) formed at the corners between the portions of the end walls (241, 242) and the lateral walls (243, 244) to facilitate winding a wire of the coil (19).

14. Insulator according to one of Claims 1 to 13, **characterized in that** each part (401, 402) of the insulator further comprises grooves (53) formed in at least one of the flanges (261, 262) for the passage of the lacquer at the coil (19).

15. Electric machine stator or rotor comprising teeth (14) originating from a yoke frame (17) around which is positioned a coil insulator (20) in two parts (401, 402) according to one of the preceding claims bearing a coil (19).
